# EUROPÄISCHE PATENTANMELDUNG

(11) **EP 1 969 924 A1**
(43) Veröffentlichungstag der Anmeldung: **17.09.2008**
(21) Anmeldenummer: 07005095.0
(22) Anmeldetag: 13.03.2007
(51) Int. Cl.: A01K 1/015

(54) **Tiereinstreu aus Miscanthus**

(71) Anmelder: Neumann, Ute, 72768 Reutlingen (DE)
(72) Erfinder: Brändle, Tobias, 72805 Lichtenstein (DE)
(74) Vertreter: Kohler Schmid Möbus

(57) **Zusammenfassung**

Die Erfindung betrifft eine Einstreu für die Tierhaltung, ausgeformt als zylindrische Pellets, aus faserigem biologischem Ausgangsmaterial, deren Anwendung sich besonders für die Pferdehaftung, aber ebenso vorteilhaft für die Kleintierhaltung, anbietet. Das Verfahren zur Herstellung zeichnet sich dadurch aus, dass die Faserstruktur des Miscanthus über die Länge der Pellets gänzlich oder überwiegend erhalten wird. Die Anlage zur Durchführung des Verfahrens ist charakterisiert, durch in ihrer Arbeitsgeschwindigkeit regelbare Ballenauflöser (1), in denen das Material zugleich gehäckselt wird, eine Hammermühle (3), in der das über ein Fördersystem (2) zugeführte Material längs seiner Fasern weiter zerkleinert wird, und eine PelletPresse (9), die über eine Presshydraulik zur stufen losen Veränderung des Abstandes zwischen den Kollerrollen und der Matrize sowie zum schnellen und problemlosen Entspannen des Kollerkopfes verfügt.

## Beschreibung

Die Erfindung betrifft eine Einstreu für die Tierhaltung aus faserigem biologischem Ausgangsmaterial, deren Anwendung sich besonders für die Pferdehaltung, aber ebenso vorteilhaft für die Kleintierhaftung, anbietet.

Zudem zielt die Erfindung von vornherein darauf ab, die Einstreu nach ihrem bestimmungsgemäßen Gebrauch weiterzuverwenden, so z. B. als Heizmaterial und Dünger sowie zur Erzeugung von Wasserstoff, insbesondere hochreinem Wasserstoff, im Zuge einer Vergasung.

Einstreu aus organischem faserigem Material wie Stroh, Hanf und Hobelspänen ist seit langem bekannt. Es gibt zudem den Vorschlag, Einstreu für in Boxen gehaltene Pferde aus gehäckseltem Raps und Erbsstroh herzustellen (DE 202 02 270 U1). Des Weiteren ist verschiedentlich angeregt, so genanntes Elefantengras und weitere perennierende C4- Gräser als Einstreu zu nutzen (www.miscanthus.de).

Daneben gibt es Anregungen, Einstreu aus gerissenen Kartonstücken (GB 2 254 769 A) und flüssigkeitsabweisenden Kunststoffteilchen (DE 296 09 089 U1) herzustellen; deren offensichtliche Nachteile, nämlich schlechtes Handling infolge ungünstiger geometrischer Abmessungen (große Breite und Länge bei minimaler Dicke) bzw. minimale Saugfähigkeit infolge Hydrophobie, sind jedoch ursächlich für eine mangelnde Praxisakzeptanz. Dagegen hat sich eine Einstreu aus einer Mischung von Stroh und Papierschnitzeln gut bewährt.

Es ist ferner seit Jahren bekannt, faseriges Material zu Pellets zu pressen und es in dieser Form als Einstreu, bevorzugt für große Tiere, zu verwenden. Das betrifft grundsätzlich alle Einstreumaterialen (siehe z. B. DE 197 11 091, US 4 788 936, DE 198 24 132 C2) einschließlich verschiedenster Kombinationen bis hin zu saugfähigen Stroh-Pellets in Bananenfaserverpackung (DE 94 15 652 U1).

Auffallend ist, dass in DE 198 24 132 C2 herausgestellt wird, dass kugelförmige Pellets besonders vorteilhaft seien. Demzufolge liegt das Hauptmerkmal der Erfindung darin, dass die Pellets einen Durchmesser >40 mm, bevorzugt um 50 mm, haben.

Gerade damit sollen - gepaart mit einem Verfahren zur Pellet-Erzeugung, wie es unter anderem für die Brikettierung genutzt wird - die Nachteile der bis dahin bekannten Einstreu-Pellets (mangelnde Entstaubung, schwere Auflösbarkeit und zu geringe Saugfähigkeit) beseitigt werden. Man geht davon aus, dass sich so die Wasseraufnahmekapazität der vorgeschlagenen Einstreu mehr als verdoppeln lässt. Des Weiteren wird - allerdings ohne jegliche nähere Angabe - angegeben, dass die erfindungsgemäßen Pellets auch als Mischpellets, wobei neben Stroh, Hanf, Elefantengras oder ähnliche Fasern oder Halmgut auch Hobelspäne und ähnliche Abfallstoffen als Komponenten in Betracht kommen, ausgeführt sein können.

Eine nähere Betrachtung im Lichte praktischer Anwendungen zeigt allerdings, dass die bislang vorherrschenden kugelförmigen und bevorzugt relativ großen Strukturen der Einstreu wesentlichen Kriterien wie Transport- und Lagervolumen sowie rascher, fester Matratzenbildung, die die Ausrutschgefahr für die Tiere wesentlich verringert, nur bedingt genügen.

Neuerdings ist aus DE 20 2004 003 306 U1 eine Einstreu für die Tierhaltung bekannt, die sich gegenüber allen marktgängigen Produkten nicht nur durch hervorragende Saugfähigkeit, sondern auch durch eine nachhaltige Bindung des Urins der Tiere und folglich durch stark reduzierte bakterielle Belastungen sowie unterdrückte Ammoniak- und Wärmebildung auszeichnet. Dabei hat sich, neben der angestrebten platzsparenden Lagerhaltung, im praktischen Gebrauch gezeigt, dass aus der losen Einstreu nach wenigen Tagen ein stabiler, rutschfester und trockener Belag entsteht. Hierfür ist die Einstreu gänzlich oder teilweise aus Miscanthus hergestellt und zylindrisch ausgeformt.

Überraschenderweise wurde nämlich gefunden, dass zylindrische Pellets in der Praxis die oben genannten Anforderungen, also Trockenlegung der Miscanthus-Pellets bei gleichzeitiger Bindung von Urin/Unterdrückung von Ammoniak, verbunden mit weiteren Forderungen, besonders hinsichtlich platzsparender Lagerhaltung und kurzfristiger Ausbildung eines stabilen, rutschfesten Belages, am besten erfüllen.

Ursächlich hierfür ist, dass die einzelnen Pellets der Einstreu nur diskontinuierlich und in relativ langen zeitlichen Abständen befeuchtet werden - insbesondere dann, wenn das Einstreu täglich eingeebnet wird - und sich somit relativ lange Pausen zum Austrocknen ergeben, wodurch einzelne belastete Partikel des Einstreumaterials statistisch eine hohe Chance haben, wieder auszutrocknen und weiter aktiv zu bleiben.

Die größtmögliche Oberfläche, die Kugel, ist also entgegen der ursprünglichen Annahme gar nicht notwendig und im Hinblick auf die Komplexität der relevanten Kriterien auch nicht vorteilhaft; vielmehr zeigen Untersuchungen über einen Zeitraum von mehreren Jahren, dass vergleichsweise kleine zylindrische Miscanthus-Pellets die größte praktische Wirksamkeit entfalten.

Diese Untersuchungen zeigen auch, dass sich mit der Miscanthus-Einstreu die Hygiene in den Stallungen wie erhofft verbessern lässt; im Vergleich zu praktisch allen Produkten auf dem Markt sind z. B. die wenigsten Schimmelbildungen, die geringste Fliegenentwicklung und ein relativ stabiles Stallklima über das Jahr nachweisbar.

Ein weiterer wesentlicher Vorteil besteht in der bequemen, zeitsparenden Reinigung der Boxen. Die Arbeitszeit und das Mistvolumen reduzieren sich fast um die Hälfte, entsprechend können Personal und Entsorgungskosten gespart werden. Im Übrigen wird für eine Box, die mit einem Pferd belegt ist, ca. 20 kg Einstreu/10 Tage benötigt.

Hinzu kommt, dass Miscanthus im Vergleich zu den bislang verwendeten Einstreumaterialien von vornherein die geringste Staubfreisetzung aufweist und sich die Staubentwicklung durch die Pelletierung noch weiter vermindern lässt, was angesichts der Tatsache, dass die Staubemission als Auslöser respiratorischer Erkrankungen bei Pferden gilt, von enormer Bedeutung ist, da chronische Atemwegserkrankungen neben den Lahmheiten bei Sport- und Freizeitpferden zu den häufigsten Diagnosen gehören (Szabo, E.; Schäfer, I.; Büscher, W.: Bewertung verschiedener Einstreumaterialien in der Pferdehaltung auf ihre Staubfreisetzung. www.landtechniknet.com).

Allerdings ist es noch nicht gelungen, anforderungsgerechte Miscanthus-Pellets im großtechnischen Maßstab herzustellen. Obgleich das Pelletieren von organischem, faserigem Material seit langem, so etwa in der Futtermittelindustrie, beherrscht wird, bereitet die Härte des Miscanthus besondere Probleme. So kommt es, verwendet man die üblichen Mahl- und Pelletieranlagen für Stroh oder dergleichen, regelmäßig nach kurzer Betriebsdauer zum Festfahren der Anlage durch das erwärmte und verklebte Material. Vielfach fallen Pressen auch dadurch aus, dass die Matrizen regelrecht versotten oder gar infolge der Festigkeit des Miscanthus kaputtgehen.

Gegenwärtig glaubt man, dass Problem durch feines Zermahlen des Miscanthus lösen zu können. Dem steht jedoch gegenüber, dass die so strukturierten Pellets durch das Darauftreten der Tiere ohne weiteres zerbröseln und geradezu eine überproportionale, nicht gewollte Staubbildung fördern.

Aufgabe der Erfindung ist es, die Nachteile des Standes der Technik zu beseitigen. Insbesondere sollen zylindrische Miscanthus-Pellets mit hoher Produktivität nahezu staubfrei herstellbar sein, die sich durch eine hohe Trittfestigkeit und eine vergleichsweise sehr geringe Staubentwicklung bei der Matratzenbildung auszeichnen.

Diese Aufgabe wird durch die Merkmale der Patentansprüche 1 und 5 gelöst; vorteilhafte Ausbildungen der Erfindung sind in den Ansprüchen 2 bis 4 bzw. 6 bis 11 offenbart.

Nach Maßgabe der Erfindung ist vorgesehen, die Pelletierung des Miscanthus so durchzuführen, dass dessen Faserstruktur weitgehend erhalten bleibt. Demgemäß erfolgt die Pelletierung im Gegensatz zum Stand der Technik ohne die bislang übliche feinkörnige Zermahlung des Miscanthus. In gleicher Weise wird vorgegangen, wenn die Pellets aus einer Mischung von Miscanthus und einem anderen faserigen Material, etwa Stroh, hergestellt werden. Bevorzugte Mischungsverhältnisse sind hier z. B. 70% Miscanthus/30% Stroh. In jedem Fall ist in den bevorzugt 6 bis 10 mm dicken und bis zu 20 mm langen Pellets die Faserstruktur des Miscanthus der natürlichen Strukturierung angelehnt, d. h., die Fasern liegen vorwiegend in Längsrichtung der zylinderförmigen Pellets. Die damit gut funktionierenden Kapillareffekte führen bei Verdunstung von Wasser an den luftzugänglichen Oberflächen der so gebildeten Einstreu dazu, dass durchweg Wasser aus den feuchten Zellulose-Fasern abgezogen wird.

Das auf die weitgehende Beibehaltung der Struktur des Miscanthus gerichtete Herstellungsverfahren vermeidet also verfahrensimmanent jegliche unnötige Staubentwicklung, die bei für die Pelletierung fein gemahlenem Miscanthus infolge der durchgängig "gebrochenen" Faserstrukturen nicht beherrschbar ist. Da Staub zweifelsfrei eine zentrale Rolle bei der so genannten chronisch obstruktiven Bronchitis (COB), an der Pferde namentlich infolge schlechter Stalllufthygiene häufig erkranken (Szabo, E.; ..., s. o.), spielt, kann bei der Umstellung von herkömmlicher Einstreu auf Einstreu aus Miscanthus begründet ein Fortschritt bei der Vermeidung und Bekämpfung der COB erwartet werden, zumal im gesamten erfindungsgemäßen Herstellungsprozess der Miscanthus-Einstreu, angefangen von der Aufbereitung der Ausgangsmaterialien, über die Pelletierung bis hin zur Benetzung der Pellets mit filmbildenden Materialien, die der Verbesserung des Stallklimas dienen, faserige Partikel bzw. Staub abgesaugt bzw. abgeschieden wird.

Das Verfahren gemäß der Erfindung zielt also nicht nur, wie vielfach in der Literatur und von Herstellern beworben, auf die Auslieferung von "staubfreier" Einstreu ab, sondern vermeidet die nachträgliche, durch das Darauftreten der Tiere verursachte Staubentwicklung aus den Pellets heraus.

Neben den bevorzugt mehreren Ballenauflösern und der Hammermühle, die die weitgehende Beibehaltung der länglichen Faserstrukturierung des Miscanthus absichert, ist die Pellet-Presse das Kernstück der erfindungsgemäßen Anlage zur Durchführung des Verfahrens. Die hier vorgesehene Presshydraulik ermöglicht es, den Abstand zwischen den Kollerrollen und der jeweiligen Matrize zu verändern sowie den Kollerkopf schnell und problemlos zu entspannen. Der Pressdruck kann folglich - in Verbindung mit einer automatischen Pressenregelung - adäquat zur Zufuhr des Pressmaterials geregelt werden; insbesondere ist es durch einen stetigen Druckaufbau möglich, die Spezifik des Miscanthus, seine hohe Härte, prozesstechnisch sicher zu beherrschen.

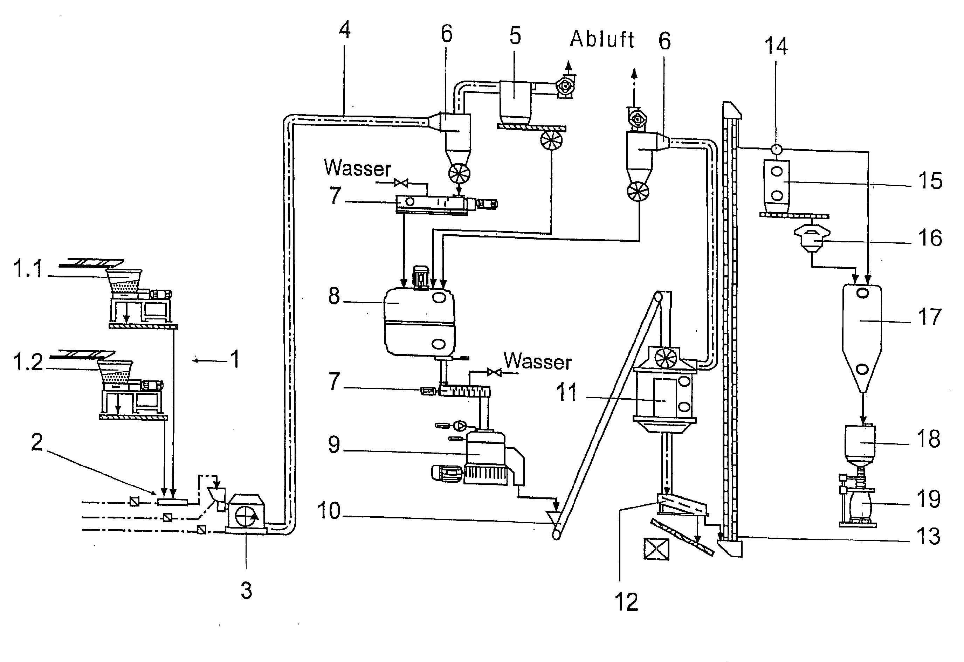

Die Erfindung soll nachstehend anhand eines Ausführungsbeispieles näher erläutert werden; die beiliegende Figur zeigt hierfür in schematischer Darstellung die Komponenten der Anlage und deren prinzipielles Zusammenwirken.

Die Anlage verfügt über zwei Ballenauflöser 1, denen zum einen Miscanthus und zum anderen Stroh für die Herstellung einer Einstreu aus beispielsweise 70% Miscanthus und 30% Stroh als Ballen zugeführt wird. Um dieses Mischungsverhältnis zu erhalten, arbeiten die Ballenauflöser 1.1 und 1.2 mit unterschiedlichen Drehzahlen. In beiden Ballenauflösern erfolgt ein Aufreisen der jeweiligen Ballen, wobei der Miscanthus und das Stroh zu stark unterschiedlich langen Stücken gehäckselt werden.

Die hauptsächlich in einem Streubereich von 1 bis 10 cm vorliegenden Miscanthus-/Stroh-Stückchen werden danach über das Fördersystem 2 der Hammermühle 3 zugeführt, in der sie weiter so zerkleinert werden, dass die Faserstruktur in Längsrichtung ausgeprägt bleibt. Die Hammermühle 3 weist hierfür eine symmetrische Mahlkammer, einen Rotor aus massiven, allseitig bearbeiteten Stahlscheiben und Schläger aus scharfkantigem, nitriergehärtetem Flachmaterial auf. Die Länge der biologischen Materialien beträgt dann ca. 2 bis 4 cm.

Über das wegen des anfallenden Staubes mit Unterdruck arbeitenden Transportrohres 4 gelangt das zerkleinerte Material in den Zyklon 6, in dem dessen Schwerteile und Partikel getrennt werden; der Filter 5 nimmt, durch die Abluft befördert, die Partikel bzw. den Staub auf. Das so gereinigte Material wird durch die Förderschnecke 7, in der es oberflächig mit Wasser versehen wird, dem Mischbehälter 8, in dessen zwei Kammern das Pelletiergut gleichmäßig mit Wasser durchmischt wird, zugeführt. Über eine weitere Förderschnecke 7, in der bei Bedarf nochmals Wasser zwecks Nachdosierung zugegeben werden kann, gelangt das Material in die bereits oben beschriebene Pelletier-Presse 9, in der die Halme bei einer Temperatur von 100°C gepresst, also in keiner Weise gemahlen werden. Die hohe Temperatur garantiert, dass Bakterien abgetötet werden. Die eingesetzten Matrizen sind Flachmatrizen mit Lochungen von bevorzugt 6 bis 10 mm.

Die Pellets werden über den Bandförderer 10, den Gegenstromkühler 11, das Rüttelsieb 12, das dem Aussieben von Bruchstücken dient, den Becherförderer 13 und den Bypass 14 entweder in den Vorratsbehälter 15 oder in den Vorratsbehälter 17 gebracht. Die in dem Vorratsbehälter 15 befindlichen Pellets werden auf einem Drehteller, dem so genannten Rotospray 16, bei hoher Drehzahl, z. B. 2200 U/min, mit ätherischen Ölen, geruchshemmenden Stoffen oder dergleichen benetzt. Im Behälter 17 können also je nach Bedarf sowohl unbehandelte als auch behandelte Pellets gelagert werden, die anschließend in die Absackwaage 18, in der nochmals per Unterdruck Staub abgesaugt wird, gebracht werden, bevor sie in flexible Verpackungen 19, z. B. Papiersäcke, gelangen.

Die Einstreu besitzt eine Trockensubstanz von 80% bis 90%; ihr Aussehen ist je nach Zusammensetzung der Ausgangsmaterialien braun bis hellbeige. Die Struktur besticht durch aufgearbeitete, schrottförmige Fasern, wobei die unbehandelten Pellets einen Erd-/Wiesengeruch entfalten. Das spezifische Gewicht der Pellets beträgt ca. 550 g/l.

### Liste der verwendeten Bezugszeichen:

- 1: Ballenauflöser
- 1.1: Ballenauflöser Miscanthus
- 1.2: Ballenauflöser Stroh
- 2: Fördersystem
- 3: Hammermühle
- 4: Förderrohr
- 5: Filter
- 6: Zyklon
- 7: Förderschnecke
- 8: Mischbehälter
- 9: Pelletier-Presse
- 10: Bandförderer
- 11: Gegenstromkühler
- 12: Rüttelsieb
- 13: Becherförderer
- 14: Bypass
- 15: Vorratsbehälter
- 16: Rotospray
- 17: Vorratsbehälter
- 18: Absackwaage
- 19: Verpackung/abgepackte Pellets

## Patentansprüche

1. Verfahren zur Herstellung von Tiereinstreu aus Miscanthus, bei dem das Pflanzenmaterial durch Druck und Temperatur über einen geeigneten Zeitraum mit anschließender Abkühlung und Aushärtung zu zylindrischen Pellets ausgeformt wird, **dadurch gekennzeichnet, dass** die Faserstruktur des Miscanthus über die Länge des Pellets gänzlich oder überwiegend erhalten wird, wobei während der Aufbereitung, vor und nach der Pelletierung des Miscanthus sowie vor der Abpackung der Pellets eine Abscheidung kleiner faseriger Partikel bzw. Staub erfolgt.

2. Verfahren nach Anspruch 1, **dadurch gekennzeichnet, dass** die Pellets anteilig aus Miscanthus und einem anderen faserigen Material, dessen Struktur gleichfalls überwiegend erhalten wird, hergestellt werden.

3. Verfahren nach Anspruch 2, **dadurch gekennzeichnet, dass** neben Miscanthus Stroh verwendet wird.

4. Verfahren nach einem der vorstehenden Ansprüche, **dadurch gekennzeichnet, dass** die Pellets einen Durchmesser von 6 bis 10 mm aufweisen und bis zu 20 mm lang sind.

5. Anlage zur Durchführung des Verfahrens nach Anspruch 1 mit grundsätzlich bekannten Aufbereitungs-, Förder-, Mahl-, Press-, Kühl- und Fertigwareneinrichtungen zur Pelletierung von biologischem faserigem Material, **dadurch gekennzeichnet, dass** sie zumindest einen, in seiner Arbeitsgeschwindigkeit regelbaren Ballenauflöser (1), in dem das Material zugleich gehäckselt wird, eine Hammermühle (3), in der das über ein Fördersystem (2) zugeführte Material längs seiner Fasern weiter zerkleinert wird, und eine Pellet-Presse (9), die über eine Presshydraulik zur stufenlosen Veränderung des Abstandes zwischen Kollerrollen und Matrize sowie zum schnellen und problemlosen Entspannen des Kollerkopfes verfügt, umfasst.

6. Anlage nach Anspruch 5, **dadurch gekennzeichnet, dass** zwei, üblicherweise unterschiedlich schnell arbeitende Ballenauflöser (1) vorhanden sind, von denen einer (1.1) mit Miscanthus und der andere (1.2) mit einem sonstigen biologischen Fasermaterial beschickt wird.

7. Anlage nach Anspruch 5, **dadurch gekennzeichnet, dass** die Hammermühle (3) eine symmetrische Mahlkammer, einen aus massiven, allseitig bearbeiteten Stahlscheiben zusammengesetzten Rotor und Schläger aus scharfkantigem, nitriergehärtetem Flachmaterial aufweist.

8. Anlage nach Anspruch 5, **dadurch gekennzeichnet, dass** die Presshydraulik der Pellet-Presse (9) aus Hydraulikmutter mit korrosionsgeschützten Dichtflächen, Nutringdichtungen, Drehgelenk- und Distanzringen sowie Hydraulik-Motorpumpe mit Ein-Aus-Taster, Hochdruckschlauch, Kupplungen und Druckbegrenzungsventilen besteht.

9. Anlage nach Anspruch 5, **dadurch gekennzeichnet, dass** die Matrizen der Pellet-Presse (9) auswechselbare Flachmatrizen mit Lochungen von 6 bis 10 mm sind.

10. Anlage nach Anspruch 5, **dadurch gekennzeichnet, dass** die Abscheidung kleiner Partikel bzw. Staub durch Zyklone (6) erfolgt.

11. Anlage nach einem der vorstehenden Ansprüche, **dadurch gekennzeichnet, dass** sie über einen Bypass (14) verfügt, mit dem die Pellets wahlweise über das der Benetzung der Pellets mit ätherischen Ölen, geruchshemmenden Stoffen oder dergleichen dienenden Rotosprays (16) oder direkt zur Abpackung (19) geführt werden.
